# EUROPEAN PATENT SPECIFICATION

(11) **EP 2 647 321 B1**
(45) Date of publication and mention of the grant of the patent: **31.12.2014**
(21) Application number: 12163223.6
(22) Date of filing: 04.04.2012
(51) Int. Cl.: A47J 37/06

(54) **Toasting apparatus with fixed and adjustable mechanical thermostats**
Toaster mit fixen und verstellbaren mechanischen Thermostaten
Toasteur avec thermostat mécanique fixe et ajustable

(43) Date of publication of application: 09.10.2013
(73) Proprietor: Eksen Makine Sanayi ve Ticaret A.S., 41480 Kocaeli (TR)
(72) Inventor: Tahincioglu, Besim, 41480 Kocaeli (TR); Kutlay, Engin, 41480 Kocaeli (TR); Tuzcu, Oytun, 41480 Kocaeli (TR)
(74) Representative: Sevinç, Erkan

(56) References cited:
- WO-A1-2011/003358
- JP-A- 2000 023 853
- US-A- 5 380 986

## Description

### Technical Field of the Invention

The present invention relates to an electrical household appliance and more particularly to a toaster having plates to brown a food article.

### Background of the Invention

Toasters are widely used all over the world. A toaster of the present type generally has a pair of hinged plates receiving food article between them. The upper plate being rotatable with respect to the lower plate, when closed, defines a heating chamber for toasting a food article, for instance slices of bread.

A common problem with the appliances of the present type is that temperature of the heating plates fluctuates in an undesired amount to disrupt toasting operation. This is mainly due to the reason that a conventional thermostat in thermal communication with said heating plates does not react adequately parallel to the heat dissipation and temperature rise on electrical heating means as said plates' temperature rises much slower than that of said electrical heating means. To this end an adjustable thermostat only stops heating operation after an excessive amount of heat dissipation occurs on the electrical heating means. In the case said adjustable thermostat is additionally used to control excessive heating of said electrical heating means, which is generally the case, it poses a further problem of control inefficiency in addition to the technical inconvenience by the relatively late responding thermostat causing slow temperature rise on the plates until the thermostat senses accumulated heat on the same.

A further problem associated with the thermostat occurs after powering off of said electrical heating means. Cooling starts after shutting off of the electrical power but substantial temperature decline occurs after food articles are placed on said plates, said food articles immediately absorbing heat energy. This may result in a temperature decline on said plates as much as 30-40 °C while said thermostat still maintaining its heat energy, therefore causing an extended cooling phase where no power is transferred to said heating means. It is worthy of note that faster cooling is synergically associated with extensive heat loss during grilling where plates are used in an opened flat position instead of facing one another as during toasting of bread.

Extensive heat loss may not prove to be a critical problem for food articles such as bread or bakery products where a lower and discontinuous temperature may be enough for achieving good results but in the event that it is intended to grill a meat product, temperature decline for extended periods will result in poor results, i.e. the meat products will not be adequately grilled.

A prior art document in the field of the present invention can be referred to as JP 2000 023853 among others, disclosing a plurality of thermostats respectively constituted of a bimetal. Likewise, WO 2011/003358 and US 5 380 986 are also pertinent to the subject-matter in the preamble of Claim 1 according to the present invention.

The present invention solves aforementioned problems and inconveniences by way of embodying a second control means effective in restricting temperature fluctuation while in the same time accurately maintaining grilling operation.

Finally, though, accurate heating control may be accomplished by equipping the apparatus with an electronic control unit and PTC elements, this is costly compared to the mechanical control arrangement of the invention. Therefore the present invention aims at providing an apparatus featuring grilling operation advanced temperature control without involving use of costlier control equipment.

### Objects of the Invention

Primary object of the present invention is to provide an electrical toaster in which substantial temperature fluctuation of heater plates is avoided.

Another object of the present invention is to provide an electrical toaster which can also grill meat products at adequately elevated temperatures.

Another object of the present invention is to provide an electrical toaster in which no temperature decline for extended periods of time occurs.

Another object of the present invention is to provide an electrical toaster in which advanced temperature control grilling operation is ensured without involving use of costlier control equipment.

### Summary of the Invention

The present invention proposes a domestic appliance and specifically an electrical toaster having a pair of heating plates in thermal communication with heat sources accommodated to transfer heat to said plates. Grilling plates are typically positioned in the manner that a lower plate lies horizontally in a stationary manner and an upper plate is hinged to be rotatable relative to said lower plate to be closed upon the same in order for forming a grilling chamber enclosing a food article from below and above.

The apparatus comprises a first mechanical thermostat in thermal communication with said lower grilling plate settable to power off said electrical resistance at a fixed temperature value of said plate and a second bimetal thermostat in thermal communication with said lower grilling plate settable to power off said electrical resistance at different temperature values of said plate. The minimum temperature level of said lower plate settable by said second bimetal thermostat is greater than the temperature of said plate settable by said fixed thermostat.

### Brief Description of the Figures

The figures whose brief explanation is herewith provided is solely intended for providing a better understanding of the present invention and is as such not intended to define the scope of protection or the context in which said scope is interpreted in the absence of the description.

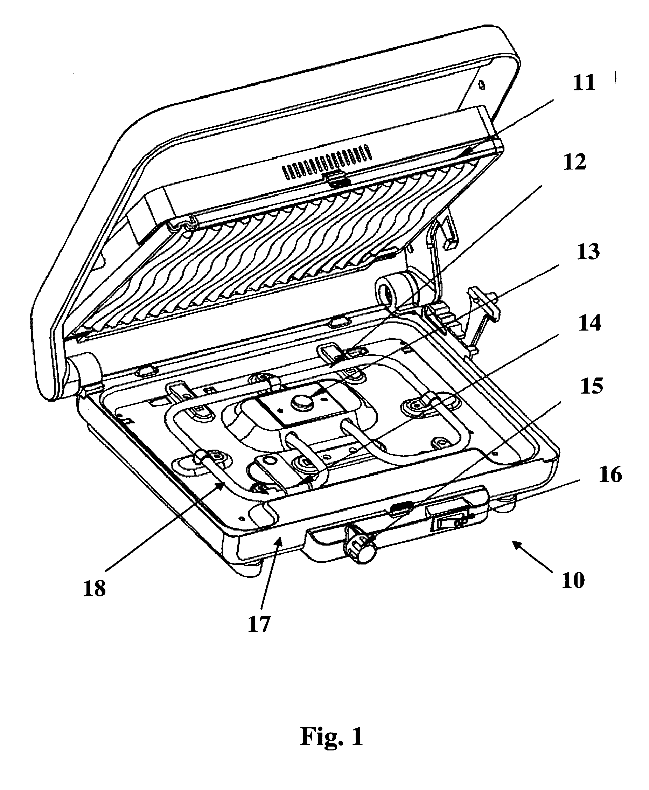

Fig. 1 demonstrates a general perspective view of the toasting apparatus according to the present invention where the inner components of the lower grilling housing are shown.

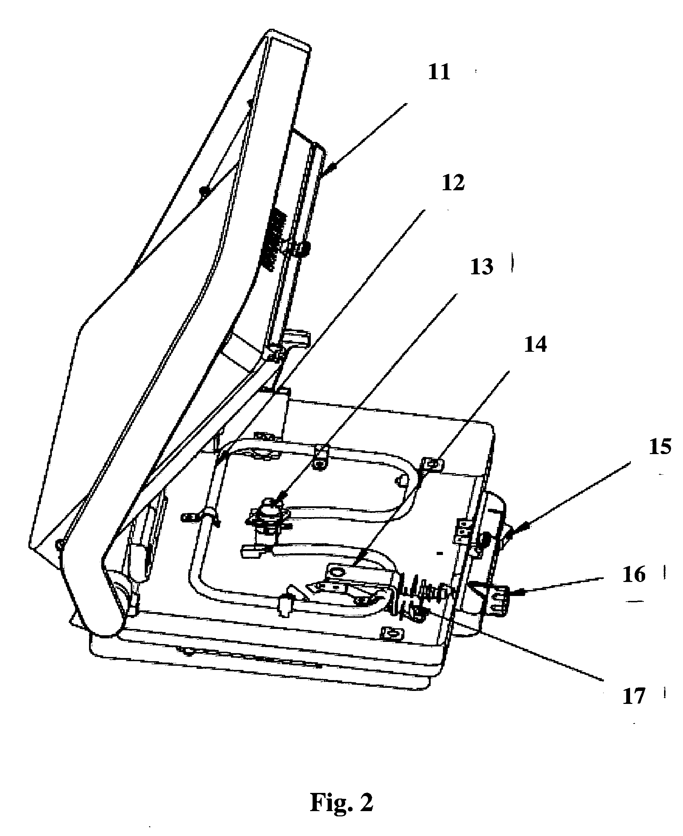

Fig. 2 demonstrates a perspective view of the toasting apparatus according to the present invention shown as in Fig.1.

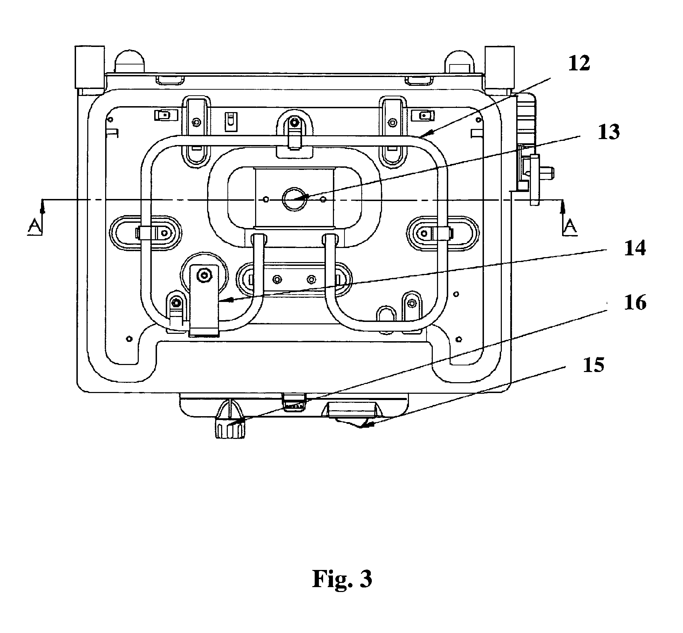

Fig. 3 demonstrates a top view of the toasting apparatus according to the present invention where inner components of the lower grilling housing are shown.

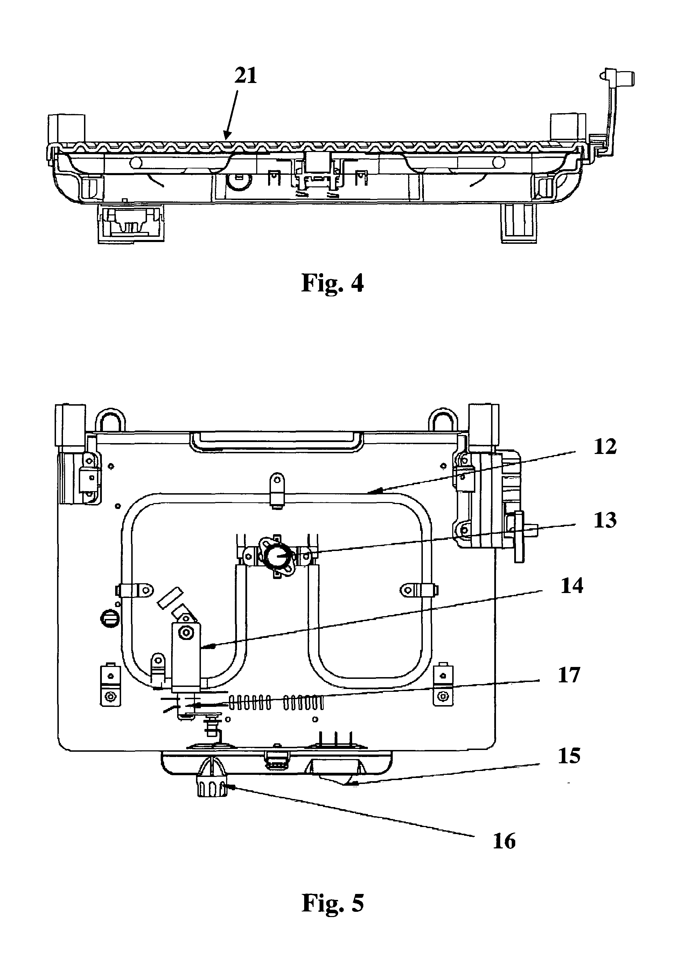

Fig. 4 demonstrates a cross-sectional view of the toasting apparatus according to the present invention, taken along the lines A-A shown in Fig. 3.
Fig. 5 demonstrates another top view of the toasting apparatus according to the present invention where inner components of the lower grilling housing are shown.

### Detailed Description of the Invention

Referring now to the figures outlined above, the present invention proposes an electrical household appliance and namely a toasting apparatus (10). The apparatus typically features a lower plate (11) stationary on a base part (19), the latter housing heating means (18) and control elements as will be explained hereinafter.

The upper grilling plate (21) according to the present invention is typically hinged to the lower grilling plate (11) in a manner to be rotatable relative to said lower plate (11). The upper grilling plate (21) is therefore adapted to be closed upon sad lower grilling (11) plate in a closed grilling position so as to provide a grilling chamber in which a food article stays in contact with said plates from above and below.

The grilling plates (11, 21) are typically designed in the form to have lengthwise parallel protrusions forming circular cross-section channels extending between the front and rear parts of the apparatus in closed position.

A control panel may typically provide users with different grilling options for instance to allow a longer grilling period. A user may also optionally set a timer (not shown) to a specified duration of grilling time of preference to energize said heat sources being electric resistances (18) of conventional tubular type, provided within the lower plate (11) housing, i.e. said base part (19).

To prevent fluctuation of the temperature of the heating plates, i.e. of said grilling plates (11, 21) in an undesired amount, an adjustable thermostat (17) only functioning in interrupting heating operation after an excessive amount of heat dissipation occurs on said electrical heating means (18) is accompanied by a second fixed thermostat (13). Use of a second thermostat (13) prevents temperature fluctuation of said grilling plates (11, 21) caused by slower reaction time of said adjustable thermostat (17) resulting in poor grilling performance with meat products.

Said adjustable thermostat (17) is conventionally set by a setting knob (16) and an on/off switch (15) establishes electrical connection of said electrical resistance (18). A contact plate (14) mechanically establishes thermal path in between said lower grilling plate (11) and said adjustable thermostat (17). An adjustable thermostat's (17) setting mechanism by a knob (16) is based on a simple mechanical structure very well-known to the person in the art.

Said fixed thermostat (13) according to the invention is a mechanical element in the form of a bimetal actuating member which is in contact directly with said lower grilling plate (11) to sense the temperature thereof. Accordingly, in the event that a meat product is grilled, said fixed thermostat (13) establishes electrical connection to said resistance (18) long before said adjustable thermostat (17) senses dramatic temperature drop on the plates (11, 21) and hence provides a more responsive regulation. In this manner, cooling of said plates (11, 21) for extended periods of time is prevented and a more stable and higher temperature is maintained, which is critical in grilling meat products.

Both the fixed and adjustable thermostats (13, 17) are bimetal actuating members for the sake of cutting manufacturing costs. This alone has a substantial share in the overall commercialization costs and the resulting apparatus has yet a fully functional toasting and grilling capacity.

According to the present invention, while said fixed thermostat (13) determines the lower temperature limit, said adjustable thermostat (17) allows users to adjust the upper temperature limit among possible values. To this end, while adjusting the temperature level said adjusted thermostat (17) will stop energizing said electrical resistance (18), a given user also adjusts the maximum temperature of the resistance (18), which is in a proportional relationship with the temperature of said lower grilling plate (11). The minimum temperature level of said lower plate (11) being proportionally associated with the adjustable minimum temperature of said resistance (18) is greater than the lower temperature limit set by said fixed thermostat (13).

In a nutshell, the apparatus comprises a first bimetal thermostat (13) in thermal communication with said lower grilling plate (11) settable to power off said electrical resistance (18) at a fixed temperature value of said plate (11) and a second bimetal thermostat (17) in thermal communication with said lower grilling plate (11) settable to power off said electrical resistance (18) at different temperature values of said plate (11). The minimum temperature level of said lower plate (11) settable by said second bimetal thermostat (17) is greater than the temperature of said plate (11) settable by said fixed thermostat (13).

## Claims

1. An electrical toasting apparatus (10) comprising a horizontally lying stationary lower grilling plate (11), an upper grilling plate (21) hingedly mounted on said lower plate (11) in the manner to be closed upon said lower plate (11) to form a chamber between said plates (11, 21) and an electrical resistance (18) in thermal communication with said lower grilling plate (11) wherein said apparatus (10) further comprises a first bimetal thermostat (13) in thermal communication with said lower grilling plate (11) settable to power off said electrical resistance (18) at a fixed temperature value of said plate (11) and a second bimetal thermostat (17) in thermal communication with said lower grilling plate (11) settable to power off said electrical resistance (18) at different temperature values of said plate (11) **characterized in that**;
the minimum temperature level of said lower plate (11) settable by said second bimetal thermostat (17) is greater than the temperature of said plate (11) settable by said fixed thermostat (13).

2. An electrical toasting apparatus (11) as in Claim 1 wherein said upper (21) and lower (11) grilling plates comprise lengthwise parallel protrusions forming circular cross-section channels extending between the front and rear parts of said toasting apparatus (11) in closed position.

## Patentansprüche

1. Elektrische Toastervorrichtung (10) mit einer horizontal liegenden stationären unteren Grillplatte (11), einer oberen Grillplatte (21), die schwenkbar an der unteren Platte (11) in einer auf die untere Platte (11) hin schließenden Weise befestigt ist, um eine Kammer zwischen den Platten (11, 21) auszubilden, und einem elektrischen Widerstand (18) in thermischer Verbindung mit der unteren Grillplatte (11), wobei die Vorrichtung (10) ferner einen ersten Bimetall-Thermostat (13) in thermischer Verbindung mit der unteren Grillplatte (11), der so einstellbar ist, dass er den elektrischen Widerstand (18) bei einem fixen Temperaturwert der Platte (11) abschaltet, und einen zweiten Bimetall-Thermostat (17) in thermischer Verbindung mit der unteren Grillplatte (11) aufweist, der so einstellbar ist, dass er den elektrischen Widerstand (18) bei anderen Temperaturwerten der Platte (11) abschaltet, **dadurch gekennzeichnet, dass** das durch den zweiten Bimetall-Thermostat (17) einstellbare minimale Temperaturniveau der unteren Platte (11) höher als die durch den fixen Thermostasten (13) einstellbare Temperatur der Platte (11) ist.

2. Elektrische Toastvorrichtung (10) nach Anspruch 1, wobei die obere (21) und untere (11) Grillplatte in Längsrichtung parallele Vorsprünge aufweisen, die Kanäle mit runden Querschnitten ausbilden, die sich zwischen dem vorderen und hinteren Teil der Toastervorrichtung (11) in geschlossener Position erstrecken.

## Revendications

1. Dispositif formant toasteur électrique (10) comprenant une plaque de grill inférieure fixe (11) positionnée horizontalement, une plaque de grill supérieure (21) montée par charnière sur ladite plaque inférieure (11) afin de se fermer sur ladite plaque inférieure (11) pour former une chambre entre lesdites plaques (11, 21) et une résistance électrique (18) en communication thermique avec ladite plaque de grill inférieure (11), dans lequel ledit appareil (10) comprend en outre un premier train thermostatique (13) en communication thermique avec ladite plaque de grille inférieure (11) réglable pour éteindre ladite résistance électrique (18) à une valeur de température fixe de ladite plaque (11) et un second train thermostatique (17) en communication thermique avec ladite plaque de grill inférieure (11) réglable pour éteindre ladite résistance électrique (18) à différentes valeurs de température de ladite plaque (11), **caractérisé en ce que** :
le niveau de température minimum de ladite plaque inférieure (11) réglable par ledit second train thermostatique (17) est supérieure à la température de ladite plaque (11) réglable par ledit thermostat fixe (13).

2. Dispositif formant toasteur électrique (11) selon la revendication 1, dans lequel lesdites plaques de grill supérieure (21) et inférieure (11) comprennent des saillies parallèles dans le sens de la longueur formant des canaux transversaux circulaires s'étendant entre les parties avant et arrière dudit toasteur (11) en position fermée.
